# EUROPÄISCHE PATENTANMELDUNG

(11) **EP 1 167 869 A2**
(43) Veröffentlichungstag der Anmeldung: **02.01.2002**
(21) Anmeldenummer: 00127751.6
(22) Anmeldetag: 19.12.2000
(51) Int. Cl.: F21S 8/10, F21V 8/00

(54) **Lichtleitelement**

(30) Priorität: 01.07.2000 DE 10032159; 01.07.2000 DE 10032160
(71) Anmelder: Hella KG Hueck & Co., 59552 Lippstadt (DE)
(72) Erfinder: Burg, Michael, 59557 Lippstadt (DE); Sachs-Dücker, Gabriele, 59597 Erwitte (DE); Gödecker, Reiner, 59558 Lippstadt (DE); Streich-Schulz, Klaus, 59555 Lippstadt (DE); Ruths, Torsten, Dr., 59557 Lippstadt (DE)

(57) **Zusammenfassung**

Lichtleitelement, insbesondere für eine Kraftfahrzeugleuchte, bestehend aus einem länglichen Optikkörper (1) mit einer auf einer Vorderseite (6) angeordneten Lichtaustrittsfläche (2), einer auf einer der Vorderseite (6) abgewandten Rückseite (7) angeordneten Reflexionsfläche (3) und einer an einem ersten Ende (10) angeordneten Lichteinkoppelfläche (4) über die Licht einer vorgelagerten Lichtquelle einkoppelbar und von der Reflexionsfläche (3) in eine Hauptabstrahlrichtung (13) etwa senkrecht zu einer Längsachse (11) des Optikkörpers (1) lenkbar ist, wobei die Lichtaustrittsfläche (2) als eine Zusatzoptik (14) ausgebildet ist, die das von der Reflexionsfläche (2) reflektierte Licht in eine vorgebbare Lichtverteilung überführt.

## Beschreibung

Die Erfindung betrifft ein Lichtleitelement insbesondere für eine Kraftfahrzeugleuchte, bestehend aus einem länglichen Optikkörper mit einer auf einer Vorderseite angeordneten Lichtaustrittsfläche, einer auf einer der Vorderseite abgewandten Rückseite angeordneten Reflexionsfläche und einer an einem ersten Ende angeordneten Lichteinkoppelfläche über die Licht einer vorgelagerten Lichtquelle einkoppelbar und von der Reflexionsfläche in eine Hauptabstrahlrichtung etwa senkrecht zu einer Längsachse des Optikkörpers lenkbar ist.

Aus der DE 198 03 537 A1 ist eine Leuchte für Fahrzeuge bzw. ein Lichtleitelement für eine Kraftfahrzeugleuchte bekannt, die aus einem länglichen Optikkörper besteht. Der längliche Optikkörper weist eine auf seiner Vorderseite angeordnete Lichtaustrittsfläche und eine auf einer der Vorderseite gegenüberliegenden Rückseite angeordnete Reflexionsfläche und eine an einem ersten Ende angeordnete Lichteinkoppelfläche auf, über die Licht einer vorgelagerten Lichtquelle eingekoppelt und von der Reflexionsfläche in eine Hauptabstrahlrichtung etwa senkrecht zu einer Längsachse des Optikkörpers gelenkt wird. Wegen der seitlichen Lichteinkoppelung kann eine Mehrzahl von Lichtleitelementen zu beliebig langen Lichtbändern angeordnet werden, so dass eine durchgehende Lichtaustrittsfläche entsteht.

Nachteilig hierbei ist, dass durch in einer Ebene angeordnete Lichtquellen nur eine gradlinige Aneinanderreihung der einzelnen Lichtleitelemente realisierbar ist ohne die Vorteile einer einfachen elektrischen Kontaktierung zu verlieren.

Weiterhin ist aus der DE 199 04 644 ein Lichtleitelement für eine Kraftfahrzeug-leuchte bekannt, die zusätzlich eine verkippte Anordnung der Lichtquelle zur Hauptstrahlrichtung des Lichtes aufweist. Dadurch kann bei dem grundsätzlich bewährten Lichtleitelement die ebene Lage der Lichtquellen bei sätzlich bewährten Lichtleitelement die ebene Lage der Lichtquellen bei gekrümmter Anordnung der Lichtleitelemente und somit die einfache elektrische Kontaktierung erhalten bleiben.

Nachteilig bei den bekannten Lichtleitelementen ist, dass die Lichtverteilung in der etwa rechtwinklig zur Längsrichtung des Lichtleitelementes befindlichen Ebene nicht beliebig modifizierbar ist.

Aufgabe der vorliegenden Erfindung ist es daher, die bekannten Lichtleitelemente so zu verbessern, dass die Lichtverteilung des über die Lichtaustrittsfläche ausgestrahlten Lichtes gezielt einstellbar ist.

Diese Aufgabe wird erfindungsgemäß in Verbindung mit dem Oberbegriff des Anspruches 1 dadurch gelöst, dass die Lichtaustrittsfläche als eine Zusatzoptik ausgebildet ist, die das von der Reflexionsfläche reflektierte Licht in eine Vorgebbare Lichtverteilung überführt.

Durch die Zusatzoptik wird eine gezielte Einstellbarkeit der Lichtverteilung erreicht. Durch die Wahl der Zusatzoptik besitzt ein einzelnes Lichtleitelement die Eigenschaft, die vollständige relative Lichtstärkeverteilung der entsprechenden Leuchtenfunktion zu generieren. Eine aus mehreren dieser Elemente zusammengesetzte Kraftfahrzeugleuchte bietet daher die Möglichkeit, die Form der leuchtenden Fläche in gewissen Grenzen frei zu gestalten.

Gemäß einer bevorzugten Ausführungsform der Erfindung ist die Reflexionsfläche als eine Mikrooptik ausgebildet. Die Mikrooptik nutzt durch eine geeignete Abstimmung von Optikkörperlänge und auszubringender Lichtstärke den Effekt der Totalreflexion. Durch die Ausbildung der Reflexionsfläche als Mikrooptik und durch die Nutzung der Totalreflexion, kann eine Verspiegelung der Mikrooptik entfallen.

Nach einer weiteren bevorzugten Ausführungsform der Erfindung ist die Lichteinkoppelfläche an der Rückseite des Optikkörpers etwa parallel zur Längsachse angeordnet. Der Lichteinkoppelfläche ist eine erste Umlenkfläche vorgelagert, durch die nach der ersten Umlenkung eine etwa in Richtung der Längsachse des Optikkörpers parallele Ausrichtung der Lichtstrahlen erfolgt.

Durch die erste Umlenkfläche ist es möglich, die Lichtquelle in einem Winkel zur Längsachse des Optikkörpers, beispielsweise in einem rechten Winkel, anzuordnen. Dadurch kann eine einfache Kontaktierung der Lichtquellen von einer Mehrzahl von Lichtelementen auf einer Platine erfolgen. Durch die erste Umlenkfläche lässt sich nach der ersten Umlenkung eine zur Längsausdehnung des Lichtleitelementes vorzugsweise parallele Ausrichtung der Lichtstrahlen erreichen. Durch entsprechende Abstimmung von erster Umlenkfläche und der Reflexionsfläche, die eine zweite Umlenkfläche bildet und vorzugsweise als Mikrooptik ausgebildet ist, kann das eingekoppelte Licht in eine Hauptabstrahlrichtung senkrecht zur Längsausdehnung bzw. Längsachse des Lichtleitelementes gelenkt werden.

Nach einer weiteren bevorzugten Ausführungsform der Erfindung weist der Optikkörper zu seiner Fixierung auf einer Platine eine die optische Eigenschaften nicht beeinflussende Haltegeometrie in Form von Haltebeinchen auf.

Durch die beispielsweise seitlich an der Unterseite angeordnete Haltebeinchen, die die optischen Eigenschaften praktisch nicht beeinflussen, lässt sicht das Lichtleitelement relativ einfach auf einer Platine fixieren.

Gemäß einer weiteren bevorzugten Ausführungsform der Erfindung ist die Lichteinkoppelfläche an die Geometrie der Kontur der Lichtquelle angepasst, die beispielsweise als eine Leuchtdiode ausgebildet ist.

Durch eine beispielsweise konkave Ausformung der Lichteinkoppelfläche lässt sich so zwischen Leuchtdiode und Lichteinkoppelfläche ein Formschluss mit geringen Lichtverlusten erreichen.

Nach einer weiteren bevorzugten Ausführungsform der Erfindung weist der Optikkörper an seinem ersten Ende ein erstes Kopfstück mit einem mind. in einer ersten Ebene gewölbten Stirnfläche und an seinem dem ersten Ende abgewandten zweiten Ende ein zweites Kopfstück mit einer gegensätzlich gewölbten Stirnfläche auf, so dass benachbarte Stirnflächen zweier in Reihe hintereinander angeordneter Optikkörper gelenkartig ineinandergreifen. Die Stirnflächen können dabei in einer rechtwinklig zur ersten Ebene angeordneten zweiten Ebene ebenfalls gewölbt sein. In einer bevorzugten Ausführungsform der Erfindung ist die Stirnfläche des der Lichtquelle benachbarten ersten Kopfstütze konkav und die des zweiten Kopfstückes konvex gewölbt.

Dadurch wird vorteilhaft erreicht, dass sich zwischen benachbarten Lichtelementen keine krümmungsabhängige keilförmige Spaltbildung einstellt. Um eine optimale Beweglichkeit zu gewährleisten, sind im Idealfall die Radien in beiden senkrecht zueinander stehenden Ebenen gleich, so dass sich als Spezialfall eine Kugelkalotte ergibt. Mit dieser Geometrie sind zwischen zwei Elementen Knickwinkel etwa kleiner als 10⁰ ohne sichtbare Spaltbildung realisierbar.

Die quasi-parallele Ausrichtung der Lichtstrahlen im Lichtleitelement wird durch die der Mikrooptik gegenüberliegende Zusatzoptik in die gewünschte Lichtverteilung überführt. So lassen sich mit einem Spritzgießwerkzeug durch Wechsel des Optik-Einsatzes unterschiedliche Lichtverteilungen realisieren, was gleichzeitig auch unterschiedliche Anbaulagen des Lichtleitelementes an einer Fahrzeugkarosserie ermöglicht.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

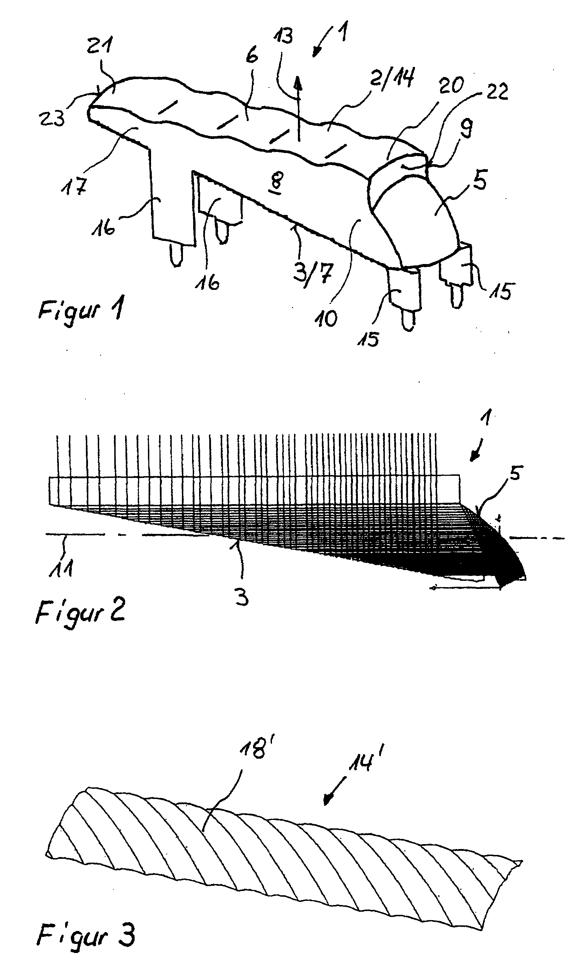

- Figur 1:: Eine räumliche Darstellung eines Lichtleitelementes,
- Figur 2:: eine Seitenansicht eines Lichtleitelementes mit Darstellung des Strahlenganges ohne Zusatzoptik,
- Figur 3:: eine räumliche Darstellung einer Zusatzoptik mit Riffeln ohne Gegenradien,

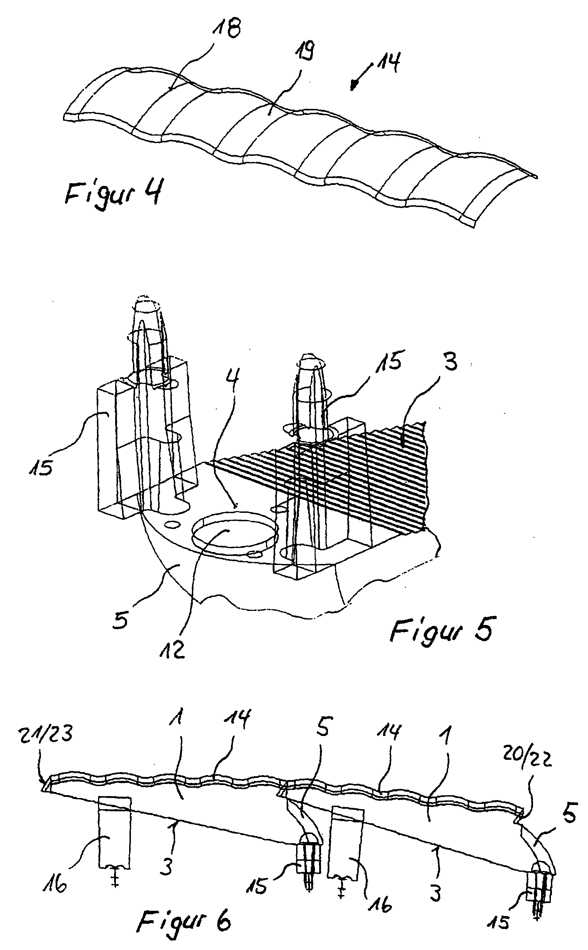

- Figur 4:: eine räumliche Darstellung einer Zusatzoptik mit Riffeln und Gegenradien,
- Figur 5:: eine Untersicht in räumlicher Darstellung einer Haltegeometrie inklusive Formschluss zum Leuchtmittel,

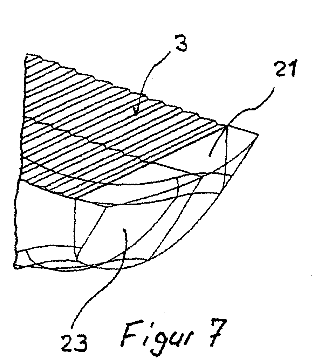

- Figur 6:: eine Seitenansicht zweier in Reihe angeordneter und in einem Winkel zueinander gekippter Lichtleitelemente in schematischer Darstellung und
- Figur 7:: eine räumliche Darstellung zweier benachbarter Lichtleitelemente mit Kalottengeometrie in kontur - nachgeführter Anordnung

Ein Lichtleitelement besteht im Wesentlichen aus einem länglichen Optikkörper 1 mit einer Lichtaustrittsfläche 2, einer Reflexionsfläche 3, einer Lichteinkoppelfläche 4 und einer ersten Umlenkfläche 5.

Auf seiner Vorderseite 6 weist der Optikkörper 1 die Lichtaustrittsfläche 2 und auf seiner der Vorderseite 6 abgewandten Rückseite 7 weist der Optikkörper 1 die Reflexionsfläche 3 auf. Die Lichtaustrittsfläche 2 und die Reflexionsfläche 3 werden von einer ersten Seitenfläche 8 und einer in einem Abstand gegenüberliegenden zweiten Seitenfläche 9 seitlich begrenzt und miteinander verbunden.

An einem ersten Ende 10 des Optikkörpers 1 ist etwa parallel zur Längsachse 11 des Optikkörpers 1 die Lichteinkoppelfläche 4 angeordnet. Die Lichteinkoppelfläche 4 weist eine konkave Wölbung 12 zur Aufnahme einer nicht dargestellten Lichtquelle, die beispielsweise als Leuchtdiode ausgebildet ist, auf. Die Leuchtdiode kann formschlüssig mit ihrer Lichtabstrahlfläche in die konkave Wölbung 12 der Lichteinkoppelfläche 4 eingesetzt werden. Die Einkoppelfläche 4, wird zur Lichtaustrittsfläche 2 hin von der ersten Umlenkfläche 5 überspannt. Um Lichtverluste gering zu halten ist die erste Umlenkfläche 5 verspiegelt.

Die Reflexionsfläche 3, die eine zweite Umlenkfläche darstellt, ist als eine Mikrooptik ausgebildet. Die Mikrooptik besteht beispielsweise aus einer Vielzahl von entsprechenden quer zur Längsachse 11 angeordneten Prismen. Die Mikrooptik nutzt durch eine geeignete Abstimmung von Optikkörperlänge und auszubringender Lichtstärke den Effekt der Totalreflexion.

Das von der nicht dargestellten Leuchtdiode ausgehende Licht wird über die Lichteinkoppelfläche 4 bzw. deren konkave Wölbung 12 eingekoppelt und von der ersten Umlenkfläche 5 so umgelenkt, dass sich eine zur Längsausdehnung des Optikkörpers vorzugsweise parallele aus Richtung der Lichtstrahlen ergibt, die von der Reflexionsfläche 3 in eine Hauptabstrahlrichtung 13 etwa senkrecht zu der Längsachse 11 des Optikkörpers 1 zur Lichtaustrittsfläche 2 hingelenkt werden. Die Lichtaustrittsfläche 2 ist als eine Zusatzoptik 14 ausgebildet, die das von der Reflexionsfläche 3 reflektierte Licht in eine vorgebbare Lichtverteilung überführt.

Der Optikkörperkörper 1 weist zu seiner Fixierung auf einer nicht dargestellten Platine eine die optischen Eigenschaften nicht bzw. wenig beeinflussende Haltegeometrie in Form von Haltebeinchen 15, 16 auf. Zwei vordere Haltebeinchen 15 sind dabei dem' ersten Ende 10 benachbart. Zwei hintere Haltebeinchen 16 sind zu einem dem ersten Ende 10 abgewandten zweiten Ende 17 hin in einem Abstand den vorderen Haltebeinchen 15 benachbart.

Die Zusatzoptik 14 ist mit Riffeln 18 und Gegenradien 19 versehen. Es ist aber auch möglich, die Zusatzoptik 14' nur mit Riffeln 18' zu versehen.

Der Optikträger weist an seinem ersten Ende 10 ein erstes Kopfstück 20 und an seinem zweiten Ende 17 ein zweites Kopfstück 21 auf. Das erste Kopfstück 20 weist eine erste Stirnfläche 22 auf, die konkav gewölbt ist. Das zweite Kopfstück 21 weist eine auf die erste Stirnfläche 22 abgestimmte zweite Stirnfläche 23 auf, die konvex gewölbt ist, so dass benachbarte Stirnflächen 22,23 zweier in Reihe hintereinander angeordneter Optikkörper 1 gelenkartig ineinandergreifen.

## Patentansprüche

1. Lichtleitelement, insbesondere für eine Kraftfahrzeugleuchte, bestehend aus einem länglichen Optikkörper mit einer auf einer Vorderseite angeordneten Lichtaustrittsfläche, einer auf einer der Vorderseite abgewandten Rückseite angeordneten Reflexionsfläche und einer an einem ersten Ende angeordneten Lichteinkoppelfläche über die Licht einer vorgelagerten Lichtquelle einkoppelbar und von der Reflexionsfläche in eine Hauptabstrahlrichtung etwa senkrecht zu einer Längsachse des Optikkörpers lenkbar ist, **dadurch gekennzeichnet, dass** die Lichtaustrittsfläche (2) als eine Zusatzoptik (14, 14') ausgebildet ist, die das von der Reflexionsfläche (3) reflektierte Licht in eine vorgebbare Lichtverteilung überführt.

2. Lichtleitelement nach Anspruch 1, **dadurch gekennzeichnet, dass** die Reflexionsfläche (3) als eine Mikrooptik ausgebildet ist, die das von der Reflexionsfläche (3) reflektierte Licht in eine vorgebbare Lichtverteilung überführt.

3. Lichtleitelement nach Anspruch 2, **dadurch gekennzeichnet, dass** die Mikrooptik durch eine geeignete Abstimmung von Optikkörperlänge und auszubringender Lichtstärke den Effekt der Totalreflexion nutzt.

4. Lichtleitelement nach einem der Ansprüche 1 bis 3, **dadurch gekennzeichnet, dass** die Lichteinkoppelfläche (4) an der Rückseite (7) des Optikkörpers (1) etwa parallel zur Längsachse (11) angeordnet ist.

5. Lichtleitelement nach Anspruch 4, **dadurch gekennzeichnet, dass** der Lichteinkoppelfläche (4) eine erste Umlenkfläche (5) vorgelagert ist, durch die nach der ersten Umlenkung eine etwa in Richtung Längsachse (11) des Optikkörpers (1) parallele Ausrichtung der Lichtstrahlen erfolgt.

6. Lichtleitelement nach einem der Ansprüche 1 bis 5, **dadurch gekennzeichnet, dass** die Lichteinkoppelfläche (4) an die Geometrie der Kontur der Lichtquelle angepaßt ist und dass die Lichtquelle als eine Leuchtdiode ausgebildet ist.

7. Lichtleitelement nach Anspruch 6, **dadurch gekennzeichnet, dass** der Optikkörper (1) zu seiner Fixierung auf einer Platine eine die optischen Eigenschaften nicht beeinflussende Haltegeometrie in Form von Haltebeinchen (15, 16) aufweist.

8. Lichtleitelement nach einem der Ansprüche 1 bis 7, **dadurch gekennzeichnet, dass** der Optikkörper (1) an seinem ersten Ende (10) ein erstes Kopfstück (20) mit einer mindestens in einer ersten Ebene gewölbten Stirnfläche (22) und an seinem den ersten Ende (10) abgewandten zweiten Ende (17) ein zweites Kopfstück (21) mit einer gegensätzlich gewölbten zweiten Stirnfläche (23) aufweist, so dass benachbarte Stirnflächen (22, 23) zweier in Reihe hintereinander angeordneter Optikkörper (1) gelenkartig ineinandergreifen.

9. Lichtleitelement nach Anspruch 8, **dadurch gekennzeichnet, dass** die Stirnflächen (22, 23) in einer rechtwinklig zur ersten Ebene angeordneten zweiten Ebene ebenfalls gewölbt sind.

10. Lichtleitelement nach Anspruch 8 oder 9, **dadurch gekennzeichnet, dass** die Stirnfläche (22) des der Lichtquelle benachbarten ersten Kopfstückes (10) konkav und die Stirnfläche (23) des zweiten Kopfstückes (21) konvex gewölbt ist
